# EUROPÄISCHE PATENTSCHRIFT

(11) **EP 3 362 772 B1**
(45) Veröffentlichungstag und Bekanntmachung des Hinweises auf die Patenterteilung: **09.12.2020**
(21) Anmeldenummer: 16781754.3
(22) Anmeldetag: 12.10.2016
(51) Int. Cl.: G01M 17/007, B62D 21/15, B62K 25/04

(54) **ELASTISCH VERFORMBARES DUMMY-FAHRZEUG ZUM DURCHFÜHREN VON TESTS FÜR FAHRERASSISTENZSYSTEME**
ELASTICALLY DEFORMABLE DUMMY VEHICLE FOR CARRYING OUT TESTS FOR DRIVER ASSISTANCE SYSTEMS
VÉHICULE FACTICE DÉFORMABLE ÉLASTIQUEMENT SERVANT À EFFECTUER DES ESSAIS POUR UN SYSTÈME D'ASSISTANCE À LA CONDUITE

(30) Priorität: 12.10.2015 DE 102015117358
(43) Veröffentlichungstag der Anmeldung: 22.08.2018
(73) Patentinhaber: 4Activesystems GmbH, 8772 Traboch (AT)
(72) Erfinder: WIMMER, Thomas, 9313 St. Georgen am Längsee (AT); FRITZ, Martin, 8723 Kobenz (AT)
(74) Vertreter: Dilg, Haeusler, Schindelmann Patentanwaltsgesellschaft mbH
(86) Internationale Anmeldenummer: PCT/EP2016/074410
(87) Internationale Veröffentlichungsnummer: WO 2017/064093

(56) Entgegenhaltungen:
- EP-A2- 0 034 864
- DE-A1-102007 024 565
- GB-A- 2 469 932
- US-A1- 2010 078 987

## Beschreibung

### Technisches Gebiet

Die vorliegende Erfindung betrifft ein Fahrzeug zum Durchführen von Tests für Fahrerassistenzsysteme sowie ein Rad für ein Fahrzeug zum Durchführen von Tests für Fahrerassistenzsysteme. Ferner betrifft die vorliegende Erfindung ein Verfahren zum Durchführen von Tests für Fahrerassistenzsysteme mit einem Fahrzeug.

### Hintergrund der Erfindung

Zum Testen von modernen Fahrzeugsystemen, wie beispielsweise diverser Assistenzsysteme für Kraftfahrzeuge, werden Kollisionen oder kollisionsnahe Situationen zwischen dem zu testenden Testfahrzeug, welches das Assistenzsystem aufweist, und einem weiteren Dummy-Fahrzeug, wie beispielsweise einem Fahrrad mit einem Dummy, herbeigeführt.

Für eine Kollision bzw. eine kollisionsnahe Situation zwischen einem Testfahrzeug mit dem Assistenzsystem und z.B. einem Dummy-Fahrrad werden beispielsweise das Testfahrzeug und/oder das Dummy-Fahrrad auf eine bestimmte Geschwindigkeit beschleunigt. Um eine realitätsnahe Kollisionssituation herbeizuführen, werden das Testfahrzeug wie auch das Dummy-Fahrrad in Bewegung versetzt, um eine Kollision bzw. eine kollisionsnahe Situation zu erzeugen. Dabei können insbesondere Fahrerassistenzsysteme realitätsnah auf ihre Funktion, Wirksamkeit und Tauglichkeit getestet werden. Kollisionen können bei den Tests solcher Systeme oftmals nicht vermieden werden.

Zum Testen der Fahrerassistenzsysteme ist jedoch eine häufige Wiederholung der Tests notwendig. Gerade die Herstellung von dem Dummy-Fahrzeug ist ein erheblicher Kostenfaktor bei solchen Tests für Fahrerassistenzsysteme. Eine Zerstörung des Dummy-Fahrzeugs bei Kollisionen verursacht somit Kosten, insbesondere bei häufiger Wiederholung von Kollisionsversuchen.

EP 0 034 864 A2 offenbart einen Fahrradrahmen für ein herkömmliches Fahrrad. Der Fahrradrahmen besteht aus einer ovalen Röhre, an deren Enden zwei Streben und eine Gabel befestigt sind. Die Röhre und die Streben bilden mit einer Gabel ein Kreuz aus, mittels welchen ein viereckiges Gerüst aus Seilen aufgespannt wird. Die Gabel sowie die Seile sind an einer Platte befestigt. Dabei weisen die Seilenden eine Aufbreitung an deren Ende auf, welcher in eine sprechende Aufnahme in der Platte befestigt werden kann. Die Seile sind seitlich, d. h. in Achsrichtung eines Rades in eine Öffnung in die Platte eingeschoben und anschließend in dem hohen Block fixiert. Die Streben sind beispielsweise an einem Lager fixiert.

US 2010/078987 A1 offenbart einen Fahrradreifen, welcher Speichen aufweist, die aus einem Kabel und einer Gewindebefestigung bestehen. Die Kabel können mittels der Gewindebefestigungen an einem Rahmen befestigt werden. Um die Kabel können Drähte verlaufen, welche die Aerodynamik der Speichen verbessern sollen.

GB 2,469,932 A offenbart einen zusammenklappbaren Fahrradrahmen. Streben sind über ein Drehgelenk miteinander verbunden. Ferner sind die Streben über verschiebbare Schellen mit entsprechenden Rahmenstangen verbunden.

### Darstellung der Erfindung

Es ist eine Aufgabe der vorliegenden Erfindung, ein Dummy-Fahrzeug bereitzustellen, welches für einen wiederholten Einsatz in Tests für Fahrerassistenzsysteme geeignet ist.

Diese Aufgabe wird mit einem Fahrzeug zum Durchführen von Tests für Fahrerassistenzsysteme, mit einem Rad für ein Fahrzeug sowie mit einem Verfahren zum Durchführen von Tests für Fahrerassistenzsysteme mit einem Fahrzeug gemäß den unabhängigen Ansprüchen gelöst.

Gemäß einem ersten Aspekt der vorliegenden Erfindung wird ein (Dummy-) Fahrzeug zum Durchführen von Tests für Fahrerassistenzsysteme beschrieben. Das Fahrzeug weist einen Grundkörper (zum Beispiel einen Fahrzeugrahmen oder einen Volumenkörper) und zumindest eine Strebe auf. Die Strebe ist derart ausgebildet, dass ohne Einwirkung einer Aufprallkraft, welche bei Aufprall des Fahrzeugs mit einem Kollisionskörper (zum Beispiel das Testfahrzeug aufweisend die zu testenden Assistenzsysteme) erzeugbar ist, die Strebe formstabil ist und dass bei Einwirken der Aufprallkraft die Strebe elastisch verformbar ist. Die Strebe ist derart mit dem Grundkörper verbunden, dass bei Einwirken der Aufprallkraft die Strebe von dem Grundkörper zerstörungsfrei lösbar ist.

Gemäß eines weiteren Aspekts der vorliegenden Erfindung wird ein Verfahren zum Durchführen von Tests für Fahrerassistenzsysteme mit einem oben beschriebenen Fahrzeug gezeigt. Gemäß dem Verfahren wird ein Aufprall des Fahrzeugs mit einem Kollisionskörper (zum Beispiel das Testfahrzeug aufweisend die zu testenden Assistenzsysteme) erzeugt, so dass eine Aufprallkraft entsteht. Eine Strebe ist ohne Einwirkung einer Aufprallkraft formstabil und bei Einwirken der Aufprallkraft ist die Strebe elastisch verformbar, wobei die Strebe derart mit dem Grundkörper verbunden ist, dass bei Einwirken der Aufprallkraft die Strebe von dem Grundkörper zerstörungsfrei lösbar ist.

Bei einem Tests für Fahrerassistenzsysteme wird beispielsweise ein Testfahrzeug mit einem Assistenzsystem getestet. Das Assistenzsystem weist beispielsweise Sensoren, wie beispielsweise Radarsensoren auf, welche ein Hindernis, wie beispielsweise ein weiteres Fahrzeug erkennen und entsprechend passiv oder aktiv mit dem Testfahrzeug kommunizieren. Bei solchen wird beispielsweise das Testfahrzeug auf ein Dummy-Fahrzeug gemäß der vorliegenden Erfindung hinzu bewegt, wobei beide Fahrzeuge unterschiedliche Geschwindigkeiten aufweisen können. Bei Kollision des Testfahrzeugs mit dem Dummy-Fahrzeug entsteht eine Aufprallkraft. Das Testfahrzeug bewegt sich beispielsweise mit einer Geschwindigkeit von 10 km/h bis 100 km/h auf das Dummy-Fahrzeug zu, sodass die entsprechende Aufprallkraft bei Kollision mit dem Dummy-Fahrzeug entsteht.

Die Aufprallenergie, aus welcher die Aufprallkraft resultiert, kann beispielsweise in einem Bereich zwischen 100 kJ und 800kJ liegen.

Das Dummy-Fahrzeug gemäß der vorliegenden Erfindung ist beispielsweise ein Fahrzeug in der Form eines Fahrrades, eines Motorrades, eines Quads oder eines Rollators.

Das Testfahrzeug mit dem zu testen Assistenzsystem ist beispielsweise ein Kraftfahrzeug, ein Lkw oder ein Motorrad.

Gemäß dem Ansatz der vorliegenden Erfindung ist zumindest eine Strebe des Fahrzeugs mit einem Grundkörper des Fahrzeugs derart verbunden, dass bei Einwirken der Aufprallkraft die Strebe von dem Grundkörper zerstörungsfrei lösbar ist. Die Strebe ist dabei elastisch verformbar ausgebildet.

Unter dem Begriff "elastisch verformbar" wird verstanden, dass die Strebe (bzw. die unten beschrieben Speiche) unter Einwirkung der Aufprallkraft ihre Form verändern kann und bei Wegfall der einwirkenden Aufprallkraft in ihre Ursprungsform zurückkehrt.

Unter dem Begriff "zerstörungsfrei lösbar" wird eine Verbindung zwischen der Strebe und dem Grundkörper definiert, welche sich bei Einwirken der Aufprallkraft zerstörungsfrei löst. Ferner ist die Verbindung derart ausgebildet, dass ohne Einwirken der Aufprallkraft die Strebe und der Grundkörper formstabil in einer relativen Position zueinander gehalten werden können.

Beispielsweise ist der Grundkörper ein Rahmen, an welchem eine Vielzahl von Streben der eingangs definierten Art befestigt ist. Die Strebe kann beispielsweise in eine Aufnahmebohrung des Grundkörpers gesteckt werden und somit eine Steckverbindung ausbilden. Ferner können beispielsweise unten beschriebene Einspannelemente verwendet werden, welche die Strebe an den Grundkörper befestigen, sodass bei Einwirken der Aufprallkraft eine zerstörungsfreie Lösung umgesetzt wird.

Der Grundkörper mit der zumindest einen Strebe bildet die Form eines Dummy-Fahrzeugs mit originalgetreuen Geometrien nach. Dieses Dummy-Fahrzeug wird von dem Testfahrzeug mit den zu testenden Assistenzsystemen als reales Fahrzeug wahrgenommen. Somit kann mit dem Dummy-Fahrzeug realitätsnah die Funktion eines Fahrerassistenzsystems getestet werden.

Mit dem erfindungsgemäßen Dummy-Fahrzeug wird sichergestellt, dass das Risiko einer Zerstörung bei einer Kollision reduziert bzw. vermieden wird. Bei Einwirken der Aufprallkraft wird die Strebe elastisch verformt, um der hohen Aufprallenergie nachzugeben. Somit wird ein Materialdefekt aufgrund der Aufprallkraft umgangen. Zudem kann aufgrund der Aufprallkraft und beispielsweise aufgrund der elastischen Verformung die Strebe von dem Grundkörper zerstörungsfrei gelöst werden, sodass eine Verkeilung der Elemente reduziert wird und das sich daraus resultierende Defektrisiko kann verringert werden. Da somit alle Elemente des Fahrzeugs, insbesondere der Grundkörper und die zumindest eine Strebe, zwar voneinander gelöst sind, jedoch zerstörungsfrei bleiben, können diese Elemente für einen neuen Test für ein Fahrerassistenzsystem in einfacher Art und Weise erneut zusammengefügt werden, sodass die Kosten zur Beschaffung eines neuen Dummy-Fahrzeugs obsolet werden. Damit ist ein vielfach wiederverwendbares Dummy-Fahrzeug zum Durchführen von Tests für ein Fahrerassistenzsystem geschaffen. Gleichzeitig wird die Strebe derart ausgebildet, dass ohne Einwirkung einer Aufprallkraft die Strebe Form stabil ist. Zudem wird die Verbindung der Strebe mit dem Grundkörper derart stabil ausgebildet, dass ohne Einwirken einer Aufprallkraft eine kraftübertragende Verbindung zwischen der Strebe und dem Grundkörper möglich ist. Somit kann mit der Strebe und dem Grundkörper ein beliebig ausgeformtes Dummy-Fahrzeug gebildet werden.

Gemäß einer weiteren beispielhaften Ausführungsform der Erfindung weist der Grundkörper eine höhere Steifigkeit als die Strebe auf.

Der Grundkörper kann beispielsweise aus einem Kunststoff oder einer metallischen Verbindung bestehen. Der Grundkörper bildet somit einen versteifenden Kern des Fahrzeugs auf. Mit anderen Worten ist der Grundkörper steifer, und weniger nachgiebig als die zumindest eine Strebe ausgebildet. An diesen steiferen Grundkörper können somit im Vergleich zu der zumindest einen Strebe einfacher Zusatzanbauten, wie beispielsweise Meßsysteme oder Fahrzeugkomponenten (Fahrzeugsattel, Fahrzeuglenker) angebaut werden.

Gemäß einer weiteren beispielhaften Ausführungsform weist der Grundkörper ein Einspannelement, insbesondere einen elastischen Einspannclip, auf, in welchem die Strebe mittels einer Klemmverbindung lösbar befestigbar ist. Das Einspannelement kann in diesem Sinne ebenfalls auch als Aufnahmebohrung in dem Grundkörper ausgebildet werden, wobei in dieser Aufnahmebohrung die Strebe mittels einer definierten Presspassung befestigt ist. Das Einspannelement gibt eine definierte Lage und Richtung der Verbindung vor, wodurch das Dummy-Fahrzeug nach der Kollision dieselbe Gestalt und Dimension annehmen kann. Das Einspannelement kann beispielsweise einen Einspannclip ausbilden. Der Einspannclip ist aus einem elastisch verformbaren Material ausgebildet. Der Einspannclip weist einen zangenförmigen Klemmbereich auf, wobei dieser die Stange teilweise umschließt. Gleichzeitig spannt der Klemmbereich die Strebe ein. Der Einspannclip ist fest mit dem Grundkörper verbunden. Alternativ kann der Einspannclip auch fest mit der Strebe verbunden werden und mittels einer Klemmverbindung an einem Rahmenelement des Rahmens lösbar befestigt werden.

Bei Einwirken der Aufprallkraft löst sich die Strebe von dem Einspannclip, ohne dass dieser aufgrund seiner elastischen Verformbarkeit zerstört wird. Zur erneuten Durchführung eines Tests für ein Fahrerassistenzsystem kann die Strebe erneut an dem Einspannclip befestigt werden.

Ferner ist es möglich, dass durch Einsatz des Einspannclips die Strebe entlang ihrer Längsrichtung relativ zu dem Einspannclip bei Einwirken der Aufprallkraft verschoben (längsverschoben) werden kann, ohne dass sich die Strebe von dem Einspannclip löst.

Gemäß einer weiteren beispielhaften Ausführungsform ist die Strebe aus einem elastischen Kunststoff mit einem Elastizitätsmodul von ungefähr 1000 N/mm² bis ungefähr 3000 N/mm² ausgebildet.

Gemäß einer weiteren beispielhaften Ausführungsform weist die Strebe eine Fließgrenze von 40 N/mm² bis 70 N/mm² auf.

Gemäß einer weiteren beispielhaften Ausführungsform weist das Fahrzeug ein elastisches Zugelement auf, welches mit dem Grundkörper und der Strebe derart verbunden ist, dass bei Einwirken der Aufprallkraft das Zugelement zumindest an dem Grundkörper oder der Strebe befestigt bleibt und sich elastisch verformt. Das elastische Zugelement überträgt dabei ausschließlich Zugkräfte zwischen dem Grundkörper und der Strebe.

Das elastische Zugelement ist insbesondere derart ausgebildet, dass dieses eine höhere Duktilität bzw. eine höhere elastische Verformbarkeit als die Strebe aufweist. Das elastische Zugelement kann sich somit bei Einwirken der Aufprallkraft elastisch verformen, ohne dass dieses eine Verbindung mit der Strebe und/oder dem Grundkörper auflöst. Die Strebe kann sich somit von dem Grundkörper zerstörungsfrei lösen, wird aber beispielsweise aufgrund des elastischen Zugelements weiter indirekt an dem Grundkörper gehalten. Einerseits trägt das elastische Zugelement weiter zur Dämpfung der Aufprallkraft bei. Andererseits ist nach dem Aufprall, d.h. nach Lösen der Strebe von dem Grundkörper die Strebe weiter über das elastische Zugelement an dem Grundkörper verbunden. Somit kann in einfacher und schneller Art und Weise schnell die Strebe dem Befestigungsort an dem Grundkörper zugeführt und daran befestigt werden.

In einer weiteren beispielhaften Ausführungsform ist das elastische Zugelement als elastisches Band, als elastisches Seil oder als elastische Kette ausgebildet.

Gemäß einer weiteren beispielhaften Ausführungsform weist die Strebe ein Hohlprofil auf, wobei das elastische Zugelement innerhalb des Hohlprofils verläuft. Die Strebe kann mit anderen Worten eine Röhrenform ausbilden. Beispielsweise ist die Strebe ein Rohr, welches die gewünschten elastischen Eigenschaften aufweist.

Gemäß einer weiteren beispielhaften Ausführungsform ist der Grundkörper ein Rahmen bestehend aus mehreren, insbesondere drei, Rahmenelementen, welche miteinander verbunden sind.

Die Rahmenelemente können beispielsweise Stangen darstellen, welche miteinander verbunden sind und einen tragenden Verbund bzw. Rahmen ausbilden. Die Rahmenelemente sind insbesondere robuster und weniger duktil als die Streben ausgebildet. Ferner können die Rahmenelemente elastische verformbar sein. Die Rahmenelemente können beispielsweise ein Hohlprofil aufweisen. Ferner können die Rahmenelemente beispielsweise aus Faserverbundwerkstoffen, aus Metallwerkstoffen oder aus Kunststoffausgebildet werden.

Gemäß einer weiteren beispielhaften Ausführungsform sind an einem Verbindungsglied jeweils zwei Rahmenelemente miteinander verbunden. Das Verbindungsglied kann beispielsweise ein rigides bzw. stabiles Glied aus einem Vollmaterial darstellen. Das Verbindungsglied kann beispielsweise eine entsprechende Aufnahmebohrung aufweisen, in welche die entsprechenden Rahmenelemente eingesteckt werden können. Dabei können die Rahmenelemente in der entsprechenden Aufnahmebohrung im Sinne einer Presspassung befestigt werden. Die Rahmenelemente können insbesondere längs verschieblich in einer entsprechenden Aufnahmebohrung befestigt werden, sodass bei Einwirken der Aufprallkraft die Rahmenelemente in der Aufnahmebohrung verharren, jedoch längs verschieblich in Richtung ihrer Erstreckungslänge innerhalb der Aufnahmebohrung verschoben werden. Somit kann eine weitere Dämpfung der Aufprallkraft erzeugt werden.

Ferner kann in einer weiteren beispielhaften Ausführungsform ein Dämpfungselement, beispielsweise ein Gummidämpfer oder ein sonstiger hydraulischer oder pneumatischer Dämpfer, in den Rahmen, insbesondere zwischen die Rahmenelemente, integriert werden, um die Aufprallkraft abzugrenzen.

Gemäß einer weiteren beispielhaften Ausführungsform weist das Fahrzeug einen Fahrzeuglenker auf. Das Verbindungsglied weist eine Aufnahmebohrung auf, wobei der Fahrzeuglenker in die Aufnahmebohrung lösbar einsteckbar ist. An dem Fahrzeuglenker sind typischerweise die Hände eines menschenähnlichen Dummys befestigt.

Bei Einwirken der Aufprallkraft wird entsprechend eine Zugkraft von den Händen des Dummys auf den Fahrzeuglenker übertragen, sodass der Fahrzeuglenker aus der Aufnahmebohrung herausgezogen wird. Somit lösen sich die Hände des Dummys zusammen mit dem Fahrzeuglenker von dem Rahmen und insbesondere der Oberkörper des Dummys rotiert und bewegt sich von der Aufnahmebohrung weg. Dieses Wegrotieren des Oberkörpers des Dummys erzeugt wiederum eine Reduktion der initialen Aufprallkraft, sodass auch für den Dummy die Kollision besser abgefangen wird. Simuliert der Dummy einen Fahrradfahrer, so kann mit dieser wegrotierenden Bewegung ebenfalls eine Aufprallenergie des Dummys auf das Testfahrzeug mit den Fahrzeugassistenzsystemen reduziert werden, sodass eventuelle Schäden des Testfahrzeugs durch den Dummy minimiert werden.

Gemäß einer weiteren beispielhaften Ausführungsform weist das Fahrzeug einen Fahrzeugsattel auf, wobei das Verbindungsglied eine Aufnahmebohrung aufweist. Der Fahrzeugsattel ist in die Aufnahmebohrung lösbar einsteckbar.

Gemäß einer weiteren beispielhaften Ausführungsform weist das Fahrzeug ein Dummyelement auf, welches an dem Rahmen, insbesondere dem Fahrzeugsattel, befestigbar ist.

Gemäß eines weiteren Aspekts der vorliegenden Erfindung wird ein Rad für ein Fahrzeug, insbesondere dem oben beschriebenen Fahrzeug, zum Durchführen von Tests für ein Fahrerassistenzsystem beschrieben. Das Rad weist eine Radnabe und eine Speiche auf. Die Speiche ist derart ausgebildet, dass ohne Einwirkung einer Aufprallkraft, welche bei Aufprall des Fahrzeugs mit einem Kollisionskörper (zum Beispiel das Testfahrzeug aufweisend die zu testende Assistenzsysteme) erzeugbar ist, die Speiche formstabil ist und bei Einwirken der Aufprallkraft die Speiche elastisch verformbar ist. Ein erstes Ende der Speiche ist derart mit der Radnabe verbunden, dass bei Einwirken der Aufprallkraft die Speiche von dem Grundkörper bzw. der Radnabe zerstörungsfrei lösbar ist.

Die Speiche kann beispielsweise entsprechend der oben beschriebenen Strebe ausgebildet sein. Die Radnabe ist beispielsweise gemäß dem oben beschriebenen Grundkörper des Fahrzeugs ausgebildet.

Die Radnabe ist massiver und weniger nachgiebig, z.B. weniger duktil, ausgebildet als die Speiche. Die Radnabe weist ferner beispielsweise ein Kugellager oder einen Drehbolzen auf, sodass die Radnabe drehbar, beispielsweise an einer Strebe des oben beschriebenen Fahrzeugs, befestigbar ist.

An der Radnabe können beispielsweise eine Vielzahl von Speichen, beispielsweise 10 bis 25, insbesondere ungefähr 15, Speichen der oben beschriebenen Art angeordnet werden.

Unter dem Begriff "elastisch verformbar" wird verstanden, dass die Speiche unter Einwirkung der Aufprallkraft ihre Form verändern kann und bei Wegfall der einwirkenden Aufprallkraft in ihre die Ursprungsform zurückkehrt.

Unter dem Begriff "zerstörungsfrei lösbar" wird eine Verbindung zwischen der Speiche und der Radnabe definiert, welche sich bei Einwirken der Aufprallkraft zerstörungsfrei löst. Ferner ist die Verbindung derart ausgebildet, dass ohne Einwirken der Aufprallkraft die Speiche und der Grundkörper formstabil in einer relativen Position zueinander gehalten werden können.

Um diese zerstörungsfreie Lösbarkeit umzusetzen, kann die Speiche beispielsweise mit ihrem ersten Ende in einer Aufnahmebohrung der Radnabe lose oder im Sinne einer Spielpassung hineingesteckt werden, sodass bei Einwirken der Aufprallkraft sich die Speiche elastisch verformt und aus der Aufnahmebohrung hinaus gleiten kann. Ferner kann beispielsweise an der Radnabe ein Einspannelement, wie beispielsweise ein Einspannclip der eingangs beschriebenen Art befestigt sein, an welcher die Speiche im Rahmen einer Klemmverbindung eingeklemmt werden kann.

Ist das Fahrzeug ein Fahrrad bzw. ein sonstiges Zweirad, und das oben beschriebene Rad ein Hinterrad, so tritt bei entsprechenden Kollisionen der erste Kontakt zwischen einem Testfahrzeug aufweisend die Fahrzeugassistenzsysteme und dem Fahrzeug an dem Hinterrad des Fahrzeugs auf. Aufgrund der elastischen Verformbarkeit sowie der zerstörungsfrei lösbaren Befestigung der Speichen an der Radnabe kann eine Zerstörung der Radnabe bzw. der Speichen bei Einwirken der Aufprallkraft vermieden werden. Nach einer Kollision kann die Speiche in einfacher Art und Weise erneut mit der Radnabe verbunden werden und für einen erneuten Test für ein Fahrerassistenzsystem eingesetzt werden.

Gemäß einer beispielhaften Ausführungsform des Fahrzeugs weist dieses das oben beschriebene Rad auf. Die Radnabe des Fahrzeugs ist an der Strebe drehbar befestigt. Insbesondere ist die Radnabe des Fahrzeugs zerstörungsfrei lösbar an der Strebe befestigt, sodass bei Einwirken der Aufprallkraft sich die Strebe von der Radnabe löst.

Somit kann das Rad insbesondere drehbar an das Fahrzeug befestigt werden. Während des Tests kann sich das Rad, beispielsweise aufgrund eines Kontakts mit dem Untergrund, drehen, sodass hier ein realitätsnahes Simulieren während des Tests ermöglicht wird.

Gemäß einer weiteren beispielhaften Ausführungsform ist ein weiteres elastisches Zugelement, beispielsweise ein Gummiseil, eine elastische Kette oder ein Gummiband, zwischen dem Grundkörper, insbesondere einem Verbindungsglied, an welchem der Fahrzeugsattel anbringbar ist, und der Radnabe befestigt.

Während eines Aufpralls des Testfahrzeugs aufweisend das zu testende Assistenzsystem mit dem Rad wird dieses aufgrund der Haftreibung mit dem Boden unter das Testfahrzeug gedrückt bzw. gezogen. Somit könnte das Testfahrzeug über das Rad fahren und die Komponenten zerstören. Bei Anbringung des elastischen Zugelements wird dieses verhindert, da das Zugelement die Radnabe insbesondere in Richtung Fahrzeugsattel zieht und somit verhindert, dass das Rad unter das Testfahrzeug gezogen wird.

Im Folgenden werden weitere beispielhafte Ausführungsformen des Rades beschrieben:
Gemäß einer weiteren beispielhaften Ausführungsform des Rades, weist dieses ein Felgenelement auf, welches kreisförmig ausgebildet ist. Die Speiche ist mit einem zweiten Ende an dem Felgenelement befestigt.

Gemäß einer weiteren beispielhaften Ausführungsform weist das Felgenelement zumindest eine Aufnahmebohrung auf, in welche das zweite Ende der Speiche derart in die Aufnahmebohrung der Radnabe gesteckt ist, dass bei Einwirken der Aufprallkraft die Speiche von dem Felgenelement zerstörungsfrei lösbar ist.

Das Felgenelement ist insbesondere elastisch verformbar ausgebildet. Die Speichen werden zwischen das Felgenelement und der Radnabe eingespannt, wobei die Speichen sich zerstörungsfrei von zumindest dem Felgenelement oder der Radnabe lösen können, wenn die Aufprallkraft einwirkt. Das Felgenelement kann beispielsweise ein Kunststoffmaterial aufweisen. Ferner kann das Felgenelement ein elastisch verformbarer Hartgummi sein.

Gemäß einer weiteren beispielhaften Ausführungsform besteht das Felgenelement aus einem elastisch verformbaren Band, welches an den entsprechenden Enden miteinander verbunden ist.

Das Band weist beispielsweise eine Breite von ungefähr 20 bis 50 Millimeter, insbesondere von ungefähr 30 bis 40 Millimeter auf. Ferner weist das Band eine Dicke von ungefähr 2 bis 10 Millimeter, insbesondere von ungefähr 3 bis 6 Millimeter, auf. Gemäß einer weiteren beispielhaften Ausführungsform weist das Band eine Fließgrenze von 40 N/mm² bis 70 N/mm² auf.

Aufgrund des elastisch verformbaren Bandes, welches mit seinen Enden verbunden ist, kann ein elastisch verformbares Felgenelement bereitgestellt werden, wobei dieses auch in sich verwunden werden kann, falls die Aufprallkraft übertragen wird. Anschließend kann dieses sich aufgrund der Ausgestaltung der Bandform entwinden und sich in die kreisförmige Ausgangsform zurück verformen.

Gemäß einer weiteren beispielhaften Ausführungsformen weist das Felgenelement eine Metallbeschichtung oder Metallelemente, z.B. metallische Folienelemente bzw. eine Aluminiumfolie auf, welche hintereinander, insbesondere beabstandet voneinander, entlang eines Umfangs des Felgenelements angeordnet sind. Die Metallelemente weisen eine größere Dicke als eine Dicke des Felgenelements auf.

Die Metallelemente können zumindest eine metallische Oberflächenbeschichtung (und beispielsweise aus einem Kunststoff bestehen) aufweisen oder aus einer Metallverbindung, insbesondere aus einer Aluminiumverbindung, bestehen.

Insbesondere wenn das Band des Felgenelements aus Kunststoff besteht, können Assistenzsysteme bzw. deren Sensoren diese nicht orten. In realen Fahrzeugen sind die Felgenelemente üblicherweise aus Metall hergestellt, welches von den Sensoren der Assistenzsysteme detektiert wird. Um dennoch ein reales Felgenelement zu simulieren, können auf dem aus z.B. Kunststoff bestehenden Felgenelement in Umfangsrichtung Metallelemente angeordnet werden. Die Metallelemente können dabei beispielsweise beabstandet voneinander entlang der Umfangsrichtung an dem Felgenelement angeordnet werden. Somit kann sich das Felgenelement zwischen den Metallelementen elastisch verformen, wobei gleichzeitig aufgrund der Metallelemente eine Detektion des Felgenelements ermöglicht wird. Somit kann realitätsnah mit dem erfindungsgemäßen Rad ein Assistenzsystem getestet werden.

Die Metallelemente können ferner eine größere Dicke als das Band des Felgenelements aufweisen. Ferner können die Metallelemente eine Länge in Umfangsrichtung von 2 bis 4 Zentimeter aufweisen.

Gemäß einer weiteren beispielhaften Ausführungsform ist auf einer radialen äußeren Oberfläche des Felgenelements ein Füllmaterial, insbesondere ein Luftschlauch oder ein elastisches aufgeschäumtes Material (z.B. ein aufgeschäumter Kunststoff), aufgebracht. Beispielsweise kann das Band des Felgenelements dünn ausgebildet werden, um die elastische Verformbarkeit einerseits und eine ausreichend stabile Formerhaltung ohne Einwirken der Aufprallkraft zu gewährleisten. Um realitätsnah eine Felge eines realen Radrahmens nachzubilden, kann das Füllmaterial aufgetragen werden. Das Füllmaterial ist beispielsweise elastisch verformbar, auch ohne Einwirken der Aufprallkraft. Das Füllmaterial weist beispielsweise eine Dicke in Radialrichtung des Rades von ungefähr 20 bis 50 Millimeter auf.

Gemäß einer weiteren beispielhaften Ausführungsform der vorliegenden Erfindung ist an einer radialen äußeren Oberfläche des Felgenelements ein Reifen, insbesondere ein Gummireifen, angeordnet. Der Reifen kann beispielsweise ein üblicher Profilreifen für Fahrzeuge, zum Beispiel ein Fahrradreifen (Mantel), sein, welcher übliches Reifenprofil aufweist. Zwischen dem Reifen und dem Felgenelement kann beispielsweise das Füllmaterial angeordnet werden.

Gemäß einer weiteren beispielhaften Ausführungsform weist das Rad ein elastisches Zugelement auf. Das elastische Zugelement kann entsprechend dem eingangs beschriebenen Zugelement für das Fahrzeug ausgebildet sein. Das elastische Zugelement ist mit der Radnabe und der Speiche derart verbunden, dass bei Einwirken der Aufprallkraft das Zugelement an der Radnabe und der Speiche befestigt bleibt.

Zusätzlich oder alternativ ist das elastische Zugelement mit dem Felgenelement und der Speiche derart verbunden, dass bei Einwirken der Aufprallkraft das Zugelement an dem Felgenelement und der Speiche befestigt bleibt, wobei das elastische Zugelement ausschließlich Zugkräfte zwischen dem Felgenelement und der Speiche überträgt.

Das elastische Zugelement ist als elastisches Band, als elastisches Seil oder als elastische Kette ausgebildet.

Das elastische Zugelement ist insbesondere derart ausgebildet, dass dieses eine höhere elastische Verformbarkeit als die Speiche aufweist.

Das elastische Zugelement kann sich somit bei Einwirken der Aufprallkraft elastisch verformen, ohne dass dieses eine Verbindung mit der Speiche und/oder der Radnabe bzw. dem Felgenelement auflöst. Die Speiche kann sich somit von der Radnabe bzw. dem Felgenelement zerstörungsfrei lösen, wird aber beispielsweise aufgrund des elastischen Zugelements weiter indirekt an der Radnabe bzw. dem Felgenelement gehalten. Einerseits trägt das elastische Zugelement weiter zur Dämpfung der Aufprallkraft bei. Andererseits ist nach dem Aufprall, d.h. nach Lösen der Speiche von dem Grundkörper die Speiche weiter über das elastische Zugelement an der Radnabe bzw. dem Felgenelement verbunden. Somit kann in einfacher und schneller Art und Weise schnell die Speiche dem Befestigungsort an der Radnabe bzw. dem Felgenelement zugeführt und befestigt werden.

Gemäß einer weiteren beispielhaften Ausführungsform weist die Speiche ein Hohlprofil auf. Das elastische Zugelement verläuft innerhalb oder parallel außerhalb des Hohlprofils.

Das Hohlprofil der Speiche weist beispielsweise einen Außendurchmesser von ungefähr 8 bis 12 Millimeter auf. Die Speiche kann beispielsweise eine Wandstärke von 2 bis 4 Millimeter aufweisen.

Gemäß einer weiteren Beispielhaften Ausführungsform weist das elastische Zugelement eine Verdickung, insbesondere einen Knoten, auf, wobei die Verdickung größer ist als ein Öffnungsquerschnitt des Hohlprofils. Somit kann beispielsweise das elastische Zugelement durch das Hohlprofil der Speiche gesteckt werden und an einer Stirnseite überstehen. An diesem Überstand kann beispielsweise ein Knoten oder eine sonstige Aufdickung vorgesehen werden, sodass ein Durchrutschen in das Innere des Hohlprofils unterbunden wird. Zudem kann beispielsweise die Radnabe oder das Felgenelement eine entsprechende Bohrung aufweisen, durch welche das elastische Zugelement hindurchgeführt wird und auf der den Speichen abgewandten Seite der Radnabe oder des Felgenelements kann ein Knoten oder eine sonstige Aufdeckung an dem elastischen Zugelement vorgesehen werden. Somit wird ein Zurückrutschen bzw. ein Lösen des elastischen Zugelements bei Beanspruchung durch die Aufprallkraft vermieden werden.

Es wird darauf hingewiesen, dass die hier beschriebenen Ausführungsformen lediglich eine beschränkte Auswahl an möglichen Ausführungsvarianten der Erfindung darstellen. So ist es möglich, die Merkmale einzelner Ausführungsformen in geeigneter Weise miteinander zu kombinieren, so dass für den Fachmann mit den hier expliziten Ausführungsvarianten eine Vielzahl von verschiedenen Ausführungsformen als offensichtlich offenbart anzusehen sind. Insbesondere sind einige Ausführungsformen der Erfindung mit Vorrichtungsansprüchen und andere Ausführungsformen der Erfindung mit Verfahrensansprüchen beschrieben. Dem Fachmann wird jedoch bei der Lektüre dieser Anmeldung sofort klar werden, dass, sofern nicht explizit anders angegeben, zusätzlich zu einer Kombination von Merkmalen, die zu einem Typ von Erfindungsgegenstand gehören, auch eine beliebige Kombination von Merkmalen möglich ist, die zu unterschiedlichen Typen von Erfindungsgegenständen gehören.

### Kurze Beschreibung der Zeichnungen

Im Folgenden werden zur weiteren Erläuterung und zum besseren Verständnis der vorliegenden Erfindung Ausführungsbeispiele unter Bezugnahme auf die beigefügten Zeichnungen näher beschrieben. Es zeigen:
Fig. 1 ein Fahrrad als Fahrzeug mit zwei Rädern gemäß einer beispielhaften Ausführungsform der vorliegenden Erfindung,
Fig. 2 eine vergrößerte perspektivische Darstellung eines Verbindungsbereichs am Fahrzeugsattel zwischen Rahmen und Strebe des Fahrrads aus Fig. 1,
Fig. 3 eine vergrößerte perspektivische Darstellung eines weiteren Verbindungsbereichs zwischen Rahmen und Strebe des Fahrrads aus Fig. 1,
Fig. 4 ein Rad für ein Fahrrad aus Fig. 1 gemäß einer beispielhaften Ausführungsform der vorliegenden Erfindung,
Fig. 5 eine schematische Darstellung eines Rades aus Fig. 4 mit einem elastischen Zugelement gemäß einer beispielhaften Ausführungsform der Erfindung,
Fig. 6 eine vergrößerte Darstellung eines Radaufbaus gemäß einer beispielhaften Ausführungsform der vorliegenden Erfindung und
Fig. 7 eine Seitenansicht eines Fahrrads als Fahrzeug mit einem Dummy als Fahrradfahrer gemäß einer beispielhaften Ausführungsform der vorliegenden Erfindung.

### Detaillierte Beschreibung von exemplarischen Ausführungsformen

Gleiche oder ähnliche Komponenten in unterschiedlichen Figuren sind mit gleichen Bezugsziffern versehen. Die Darstellungen in den Figuren sind schematisch.

Die vorliegende Erfindung betrifft ein Fahrzeug 100, insbesondere ein Fahrrad, zum Durchführen von Tests für ein Fahrerassistenzsystem. Das Fahrzeug 100 weist einen Grundkörper 101 und zumindest eine Strebe 102 auf, welche ausgebildet ist, ohne Einwirkung einer Aufprallkraft, welche bei Aufprall des Fahrzeugs 100 mit einem Kollisionskörper erzeugbar ist, formstabil zu sein und bei Einwirken der Aufprallkraft elastisch verformbar zu sein. Die Strebe 102 ist derart mit dem Grundkörper 101 verbunden, dass bei Einwirken der Aufprallkraft die Strebe 102 von dem Grundkörper 101 zerstörungsfrei lösbar ist.

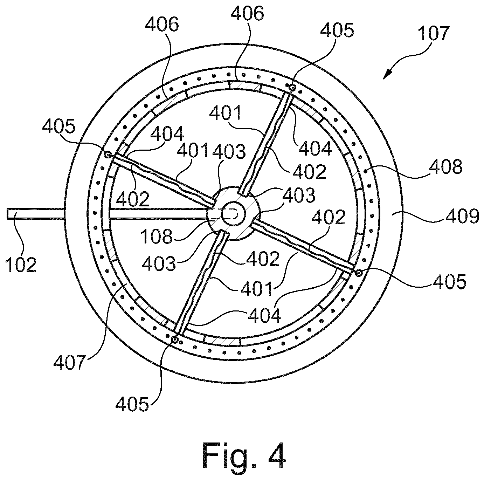

Das Fahrrad 100 weist ferner beispielsweise 2 Räder 107 gemäß einer beispielhaften Ausführungsform der vorliegenden Erfindung auf, welche im Detail in Fig. 4 bis Fig. 6 erläutert werden.

Bei solchen Tests für ein Fahrerassistenzsystem wird beispielsweise das Testfahrzeug auf das Dummy-Fahrzeug 100 hinzu bewegt, wobei beide Fahrzeuge unterschiedliche Geschwindigkeiten aufweisen können. Bei Kollision des Testfahrzeugs mit dem Dummy-Fahrzeug 100 entsteht eine Aufprallkraft. Das Testfahrzeug bewegt sich beispielsweise mit einer Geschwindigkeit von 10 km/h bis 100 km/h auf das Dummy-Fahrzeug 100 zu, sodass die entsprechende Aufprallkraft bei Kollision mit dem Dummy-Fahrzeug entsteht.

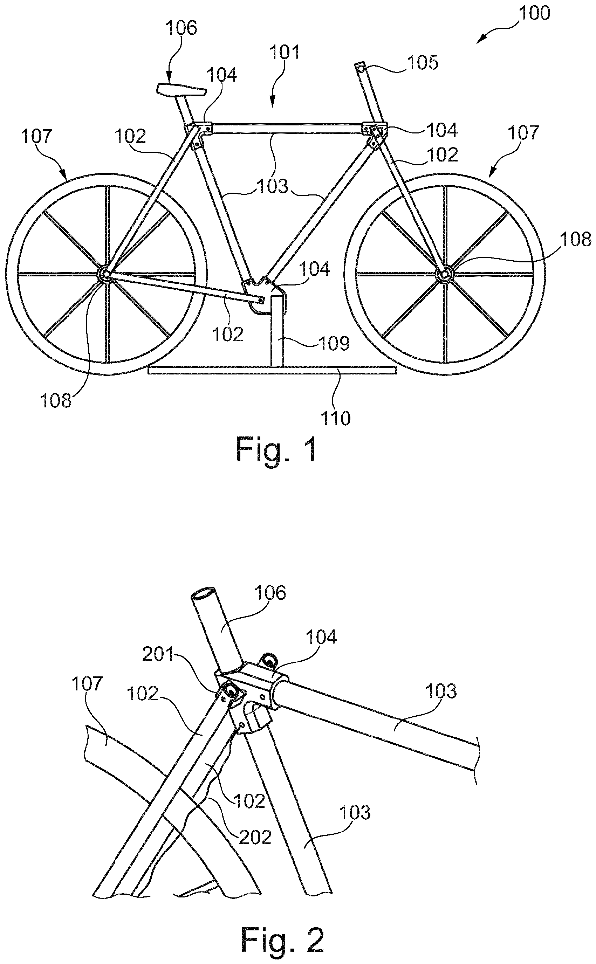

In dem Ausführungsbeispiel in Fig. 1 ist das Fahrzeug 100 ein Fahrrad, welches einen Rahmen als Grundkörper 101 aufweist. Der Rahmen besteht aus drei Rahmenelementen 103, wobei jeweils zwei der Rahmenelemente 103 miteinander befestigt sind. Die Strebe 102 des Fahrzeugs 100 ist mit einem Rahmenelement 103 derart verbunden, dass bei Einwirken der Aufprallkraft die Strebe 102 von dem Rahmenelement 103 zerstörungsfrei lösbar ist. Die Strebe 102 ist dabei elastisch verformbar ausgebildet. Das Fahrrad 100 gemäß dem Ausführungsbeispiel in Figur 1 weist beispielsweise eine Vielzahl von Streben 102 auf. So kann beispielsweise im hinteren Bereich eine Strebe 102 einen zweiten Bereich des Fahrzeugs mit einer Radnabe 108 verbinden. Im vorderen Bereich des Fahrzeugs kann beispielsweise eine strebe 102 eine Radnabe 108 eines Vorderrades 107 mit einem Lenkerbereich des Fahrrads 100 verbinden.

Die Streben 102 können beispielsweise in eine Aufnahmebohrung des Grundkörpers 101 bzw. wie weiter unten beschrieben in Verbindungsglieder 104 des Rahmens gesteckt werden und somit eine Steckverbindung ausbilden. Ferner können beispielsweise unten beschriebene Einspannelemente 201 verwendet werden, welche die Strebe 102 an dem Grundkörper 101 befestigen, sodass bei Einwirken der Aufprallkraft eine zerstörungsfreie Lösung umgesetzt wird.

Der Grundkörper 101 mit zumindest den Streben 102 bildet die Form eines Dummy-Fahrrads 100 mit originalgetreuen Geometrien nach. Dieses Dummy-Fahrrad wird von dem Testfahrzeug mit den zu testenden Assistenzsystemen als reales Fahrzeug wahrgenommen. Somit kann mit dem Dummy-Fahrrad 100 realitätsnah die Funktion eines Fahrerassistenzsystems getestet werden.

Der Grundkörper 101 bzw. die Rahmenelemente 103 bilden somit einen versteifenden Kern des Fahrrads 100 auf. Mit anderen Worten ist der Grundkörper 101 steifer und weniger duktil als die zumindest eine Strebe 102 ausgebildet. An diesen steiferen Grundkörper 101 können somit im Vergleich zu der zumindest einen Strebe 102 einfacher Zusatzanbauten, wie beispielsweise Meßsysteme oder Fahrzeugkomponenten (Fahrzeugsattel 106, Fahrzeuglenker 105) angebaut werden. Die Rahmenelemente 103 können beispielsweise Stangen darstellen, welche miteinander verbunden sind und einen tragenden Verbund bzw. Rahmen ausbilden. Die Rahmenelemente 103 sind insbesondere robuster und weniger duktil als die Streben 102 ausgebildet. Ferner können die Rahmenelemente 103 elastisch verformbar sein. Die Rahmenelemente 103 können beispielsweise ein Hohlprofil aufweisen.

An einem Verbindungsglied 104 sind z.B. jeweils zwei Rahmenelemente 103 miteinander verbunden. Das Verbindungsglied 104 kann beispielsweise ein rigides bzw. stabiles Glied aus einem Vollmaterial darstellen. Das Verbindungsglied 104 kann beispielsweise eine entsprechende Aufnahmebohrung aufweisen, in welche die entsprechenden Rahmenelemente 103 eingesteckt werden können (siehe Fig. 2). Dabei können die Rahmenelemente 103 in der entsprechenden Aufnahmebohrung im Sinne einer Presspassung befestigt werden. Die Rahmenelemente 102 können insbesondere längs verschieblich in einer entsprechenden Aufnahmebohrung befestigt werden, sodass bei Einwirken der Aufprallkraft die Rahmenelemente 103 in der Aufnahmebohrung verharren, jedoch längs verschieblich in Richtung ihrer Erstreckungslänge innerhalb der Aufnahmebohrung verschoben werden. Somit kann eine weitere Dämpfung der Aufprallkraft erzeugt werden.

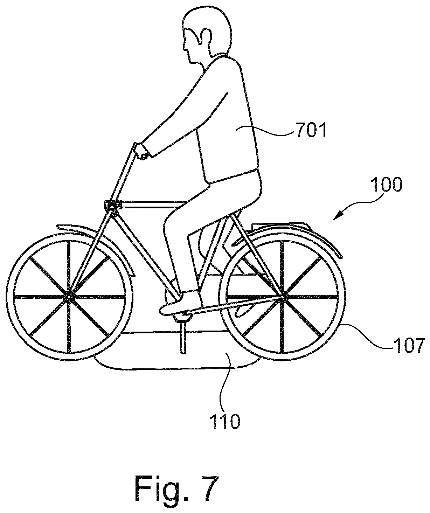

Ein Verbindungsglied 104 weist eine weitere Aufnahmebohrung auf, wobei der Fahrzeuglenker 105 in die Aufnahmebohrung lösbar einsteckbar ist. An dem Fahrzeuglenker 105 sind typischerweise die Hände eines menschenähnlichen Dummys 701 (siehe Fig.7) befestigt. Bei Einwirken der Aufprallkraft wird entsprechend eine Zugkraft von den Händen des Dummys 701 auf den Fahrzeuglenker 105 übertragen, sodass der Fahrzeuglenker 105 aus der Aufnahmebohrung herausgezogen wird. Somit lösen sich die Hände des Dummys 701 zusammen mit dem Fahrzeuglenker 105 von dem Rahmen und insbesondere der Oberkörper des Dummys 701 rotiert und bewegt sich von der Aufnahmebohrung weg.

Ferner wird ein Fahrzeugsattel 106 gezeigt, wobei das entsprechende Verbindungsglied 104 eine Aufnahmebohrung aufweist, in welcher der Fahrzeugsattel lösbar einsteckbar ist. Ferner kann ein Dummy 701 auch ohne Fahrzeugsattel 106 an dem Rahmen befestigt werden.

Das Fahrrad bzw. Fahrzeug 100 weist ferner eine Stange 109 auf, welche an einem unteren Verbindungsglied 104 befestigt ist. Die Stange 109 hält das Fahrrad bzw. Fahrzeug 100 auf einem verfahrbaren Bodenelement 110. Das verfahrbare Bodenelement 110 kann beispielsweise während eines Tests über dem Boden gezogen werden, sodass ein Fahren des Fahrrads bzw. Fahrzeugs 100 simuliert wird. Wie Fig. 1 dargestellt liegen die Räder 107 und das Bodenelement 110 auf dem Boden auf. Somit wird bei Antreiben des Bodenelements 110 das Fahrradrad bzw. Fahrzeug 100 verfahren, wobei sich aufgrund der Bodenreibung die Räder 107 drehen. Somit wird ein realitätsnah fahrendes Fahrrad bzw. Fahrzeug 100 simuliert.

Die Stange 109 kann ferner zerstörungsfrei lösbar an dem unteren Verbindungsglied 104 befestigt sein. Ferner kann dort ein Gelenk oder eine Klemmverbindung zwischen der Stange 109 und dem unteren Verbindungsglied 104 bereitgestellt werden.

**Fig. 2** zeigt eine vergrößerte perspektivische Darstellung eines Verbindungsbereichs am Fahrzeugsattel 106 zwischen Rahmen und Streben 103 des Fahrrads 100 aus Fig. 1.

Insbesondere werden zwei Streben 102 gezeigt, welche von einer Radnabe 108 zu dem gezeigten Verbindungsglied 104 geführt werden. An dem Verbindungsglied 104 ist ein Einspannelement 201, insbesondere ein elastischer Einspannclip, befestigt, in welchem die entsprechende Strebe 102 mittels einer Klemmverbindung lösbar befestigt ist. Der Einspannclip 201 weist einen zangenförmigen Klemmbereich auf, wobei dieser die Strebe 102 teilweise umschließt. Gleichzeitig spannt der Klemmbereich die Strebe 102 ein. Der Einspannclip 201 ist fest mit dem Grundkörper verbunden.

Bei Einwirken der Aufprallkraft löst sich die Strebe 102 von dem Einspannclip 201, ohne dass dieser aufgrund seiner elastischen Verformbarkeit zerstört wird. Zur erneuten Durchführung eines Tests für ein Fahrerassistenzsystem kann die Strebe 102 erneut an dem Einspannclip 201 befestigt werden.

Ferner ist es möglich, dass durch Einsatz des Einspannclips 201 die Strebe 102 entlang ihrer Längsrichtung relativ zu dem Einspannclip bei Einwirken der Aufprallkraft verschoben (längsverschoben) werden kann, ohne dass sich die Strebe 102 von dem Einspannclip 201 löst.

Ferner wird in Fig. 2 ein elastisches Zugelement 202, zum Beispiel ein Gummiband, gezeigt, welches mit dem Verbindungsglied 104 im Sattelbereich 106 und der Strebe 102 oder der Radnabe 108 (nicht dargestellt) des Rades 107 derart verbunden ist, dass bei Einwirken der Aufprallkraft das Zugelement 202 zumindest an dem Verbindungsglied 104 oder der Strebe 12 bzw. der Radnabe 108 befestigt bleibt und sich elastisch verformt.

Das elastische Zugelement 202 kann sich bei Einwirken der Aufprallkraft elastisch verformen, ohne dass dieses eine Verbindung mit der Strebe 102 und/oder dem Grundkörper 101 auflöst. Die Strebe 102 kann sich somit von dem Grundkörper 101 zerstörungsfrei lösen, wird aber beispielsweise aufgrund des elastischen Zugelements 202 weiter indirekt an dem Grundkörper 101 gehalten. Einerseits trägt das elastische Zugelement 202 weiter zur Dämpfung der Aufprallkraft bei. Andererseits ist nach dem Aufprall, d.h. nach Lösen der Strebe von dem Grundkörper 101 die Strebe 102 weiter über das elastische Zugelement 202 an dem Grundkörper 101 verbunden. Somit kann in einfacher und schneller Art und Weise schnell die Strebe 101 dem Befestigungsort an dem Grundkörper 101 zugeführt und befestigt werden. Ferner kann das Zugelement 202 insbesondere vorgespannt sein, um die Strebe 102 nach oben zu ziehen. Das elastische Element 202, welches die Strebe 102 zum Verbindungsglied 104 hält ist z.B. ein zusätzliches Elastomerseil, welches fest mit der Strebe 102 und dem Verbindungsglied 104 verbunden ist.

Ferner kann das elastische Zugelement 202 an der Radnabe 108 des Rades 107 einerseits und andererseits an dem Verbindungsglied 104, an welchen beispielsweise der Fahrzeugsattel 106 befestigt ist, fixiert werden. Dies hat den Vorteil, dass bei Lösen des Rades 107 mittels des Zugelements 202 dieses in Richtung Fahrzeugsattel 106 und somit z.B. weg vom Boden gezogen wird. Während eines Aufpralls des Testfahrzeugs aufweisend das zu testende Assistenzsystem mit dem Rad 107 wird dieses aufgrund der Haftreibung mit dem Boden unter das Testfahrzeug gedrückt bzw. gezogen. Somit könnte das Testfahrzeug über das Rad 107 fahren und die Komponenten zerstören. Bei Anbringung des elastischen Zugelements 202 wird dieses verhindert, da das Zugelement 202 die Radnabe 108 insbesondere in Richtung Fahrzeugsattel 106 zieht und somit verhindert, dass das Rad 107 unter das Testfahrzeug gezogen wird.

Wie in Fig. 2 ferner dargestellt, weist die Strebe 102 ein Hohlprofil auf, wobei das elastische Zugelement 202 innerhalb des Hohlprofils verlaufen kann.

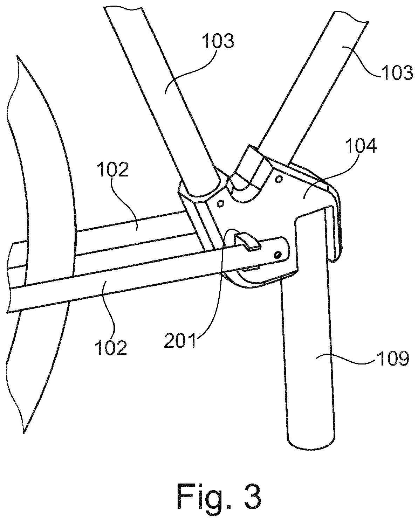

**Fig. 3** zeigt eine vergrößerte perspektivische Darstellung eines Verbindungsbereichs an einem unteren Bereich des Fahrrads 100 aus Fig. 1. an dem dort gezeigten Verbindungsglied 104 sind entsprechende Rahmenelemente 103 in Aufnahmebohrungen hineingesteckt. Ferner sind an den Seitenbereichen des Verbindungsglieds 104 Einspannclips 201 befestigt. An den Einspannclips 201 sind jeweils Streben 102 befestigt, welche in einem hinteren Bereich des Fahrrades 100 verlaufen, in welchem sie mit der Radnabe 107 verbunden sind.

Ferner wird die Stange 109 gezeigt, welcher in einer Aufnahmeöffnung des Verbindungsglieds 104 angeordnet ist. Wie in Fig. 3 gezeigt, ist die Stange 109 gelenkig gelagert und kann seitlich umklappen. Somit kann beispielsweise bei einer seitlichen Kollision mit dem Testfahrzeug das Fahrzeug 100 umklappen.

**Fig. 4** zeigt ein Rad 107 für ein Fahrzeug 100 aus Fig. 1 gemäß einer beispielhaften Ausführungsform der vorliegenden Erfindung. Das Rad 107 weist eine Radnabe 108 und eine Speiche 401 auf. Die Speiche 401 ist derart ausgebildet, dass ohne Einwirkung einer Aufprallkraft, welche bei Aufprall des Fahrzeugs 100 mit einem Kollisionskörper (zum Beispiel das Testfahrzeug aufweisend die zu testende Assistenzsysteme) erzeugbar ist, die Speiche 401 formstabil ist und bei Einwirken der Aufprallkraft die Speiche 401 elastisch verformbar ist. Ein erstes Ende 403 der Speiche 401 ist derart mit der Radnabe 108 verbunden ist, dass bei Einwirken der Aufprallkraft die Speiche 401 von der Radnabe 108 (bzw. einem Grundkörper) zerstörungsfrei lösbar ist.

Die Speiche 401 ist beispielsweise entsprechend der oben beschriebenen Strebe 102 mit unterschiedlichen geometrischen Abmessungen ausgebildet sein.

Die Radnabe 108 ist massiver und weniger duktil ausgebildet als die Speiche 401. Die Radnabe 108 weist ferner beispielsweise ein Kugellager oder einen Drehbolzen auf, sodass die Radnabe 108 drehbar, beispielsweise an einer Strebe 102 des oben beschriebenen Fahrzeugs 100, befestigbar ist. Um die zerstörungsfreie Lösbarkeit umzusetzen, kann die Speiche 401 beispielsweise mit ihrem ersten Ende in einer Aufnahmebohrung der Radnabe 108 lose oder im Sinne einer Spielpassung hineingesteckt werden, sodass bei Einwirken der Aufprallkraft sich die Speiche 401 elastisch verformt und aus der Aufnahmebohrung hinaus gleiten kann. Es kann beispielsweise an der Radnabe 108 ein Einspannelement 201, wie beispielsweise ein Einspannclip der eingangs beschriebenen Art befestigt sein, an welcher die Speiche 401 im Rahmen einer Klemmverbindung eingeklemmt werden kann.

An der Radnabe 108 können beispielsweise eine Vielzahl von Speichen 401, beispielsweise 10 bis 25, insbesondere ungefähr 15, Speichen der oben beschriebenen Art angeordnet werden. In Fig. 4 sind zur besseren Übersichtlichkeit lediglich vier Speichen 401 dargestellt.

Die Radnabe 108 ist an der gezeigten Strebe 102 drehbar befestigt. Insbesondere ist die Radnabe 108 zerstörungsfrei lösbar an der Strebe 102 befestigt, sodass bei Einwirken der Aufprallkraft sich die Strebe 102 von der Radnabe 108 löst.

Das Rad 107 weist ferner ein Felgenelement 407 auf, welches kreisförmig ausgebildet ist. Die Speichen 401 sind mit einem zweiten Ende 404 an dem Felgenelement 407 befestigt. Das Felgenelement 407 weist zumindest eine Aufnahmebohrung (Sackloch oder Durchgangsbohrung) auf, in welche das zweite Ende 404 der Speiche 401 derart gesteckt ist, dass bei Einwirken der Aufprallkraft die Speiche 401 von dem Felgenelement 407 zerstörungsfrei lösbar ist.

Das Felgenelement 407 ist insbesondere elastisch verformbar ausgebildet. Die Speichen 401 werden zwischen das Felgenelement 407 und der Radnabe 108 eingespannt, wobei die Speichen 401 sich zerstörungsfrei von zumindest dem Felgenelement 407 oder der Radnabe 108 lösen können, wenn die Aufprallkraft einwirkt.

Das Felgenelement 407 besteht aus einem elastisch verformbaren Band, welches an den entsprechenden Enden miteinander verbunden ist. Aufgrund des elastisch verformbaren Bandes, welches mit seinen Enden verbunden ist, kann ein elastisch verformbares Felgenelement 407 bereitgestellt werden, wobei dieses auch in sich verwunden werden kann, falls die Aufprallkraft übertragen wird. Anschließend kann dieses sich aufgrund der Ausgestaltung der Bandform entwinden und sich in die kreisförmige Ausgangsform zurück verformen.

Ferner ist das Felgenelement 407 mit einer Metallfolie beschichtet. Ferner weist das Felgenelement 407 Metallelemente 406 auf, welche hintereinander, insbesondere beabstandet voneinander, entlang eines Umfangs des Felgenelements 407 angeordnet sind. Die Metallelemente 406 weisen eine größere Dicke als eine Dicke des Felgenelements 407 auf.

Die Metallelemente 406 können zumindest eine metallische Oberflächenbeschichtung (und beispielsweise aus einem Kunststoff bestehen) aufweisen oder aus einer Metallverbindung, insbesondere aus einer Aluminiumverbindung, bestehen.

Auf einer radialen äußeren Oberfläche des Felgenelements 407 ist ein Füllmaterial 408, insbesondere ein Luftschlauch oder ein elastisches aufgeschäumtes Material, aufgebracht. Beispielsweise kann das Band des Felgenelements 407 dünn ausgebildet werden, um die elastische Verformbarkeit einerseits und eine ausreichend stabile Formerhaltung ohne Einwirken der Aufprallkraft zu gewährleisten. Um realitätsnah eine Felge eines realen Radrahmens nachzubilden, ist das Füllmaterial aufgetragen. Das Füllmaterial ist beispielsweise elastisch verformbar, auch ohne Einwirken der Aufprallkraft

An der radialen äußeren Oberfläche des Felgenelements ist ein Reifen 409, insbesondere eine Gummireifen, angeordnet. Der Reifen 409 kann beispielsweise ein üblicher Profilreifen für Fahrzeuge, zum Beispiel ein Fahrradreifen (Mantel), sein, welcher ein übliches Reifenprofil aufweist. Zwischen dem Reifen 409 und dem Felgenelement 407 ist das Füllmaterial 408 angeordnet.

Das Rad 107 weist ferner ebenfalls ein elastisches Zugelement 402 auf. Das elastische Zugelement 402 kann entsprechend dem eingangs beschriebenen Zugelement 202 für das Fahrzeug 100 ausgebildet sein. Das elastische Zugelement 402 ist mit der Radnabe 108 und der Speiche 401 derart verbunden , dass bei Einwirken der Aufprallkraft das Zugelement 402 an der Radnabe 108 und der Speiche 401 befestigt bleibt.

Zusätzlich oder alternativ ist das elastische Zugelement 402 mit dem Felgenelement 407 und der Speiche 401 derart verbunden, dass bei Einwirken der Aufprallkraft das Zugelement 402 an dem Felgenelement 407 und der Speiche 401 befestigt bleibt, wobei das elastische Zugelement 402 ausschließlich Zugkräfte zwischen dem Felgenelement 407 und der Speiche 401 überträgt. Das elastische Zugelement 402 kann sich somit bei Einwirken der Aufprallkraft elastisch verformen, ohne dass dieses eine Verbindung mit der Speiche 401 und/oder der Radnabe 108 bzw. dem Felgenelement 407 auflöst. Die Speiche 401 kann sich somit von der Radnabe 108 bzw. dem Felgenelement 407 zerstörungsfrei lösen, wird aber beispielsweise aufgrund des elastischen Zugelements 402 weiter indirekt an der Radnabe 108 bzw. dem Felgenelement 407 gehalten. Einerseits trägt das elastische Zugelement 402 weiter zur Dämpfung der Aufprallkraft bei. Andererseits ist nach dem Aufprall, d.h. nach Lösen der Speiche 401 von der Radnabe 108 die Speiche 401 weiter über das elastische Zugelement 402 an der Radnabe 108 bzw. dem Felgenelement 407 verbunden. Somit kann in einfacher und schneller Art und Weise schnell die Speiche 401 dem Befestigungsort an der Radnabe 108 bzw. dem Felgenelement 407 zugeführt und befestigt werden.

Wie in Fig. 4 angedeutet, weist die Speiche 401 ein Hohlprofil auf. Das elastische Zugelement 402 verläuft innerhalb Hohlprofils.

Zur Befestigung des elastischen Zugelements 402 weist dieses eine Verdickung 405, insbesondere einen Knoten, auf, wobei die Verdickung 405 größer ist als ein Öffnungsquerschnitt des Hohlprofils. Somit kann beispielsweise das elastische Zugelement 405 durch das Hohlprofil der Speiche 401 gesteckt werden und an einer Stirnseite überstehen. An diesem Überstand kann beispielsweise ein Knoten oder eine sonstige Aufdickung vorgesehen werden, sodass ein Durchrutschen in das Innere des Hohlprofils unterbunden wird.

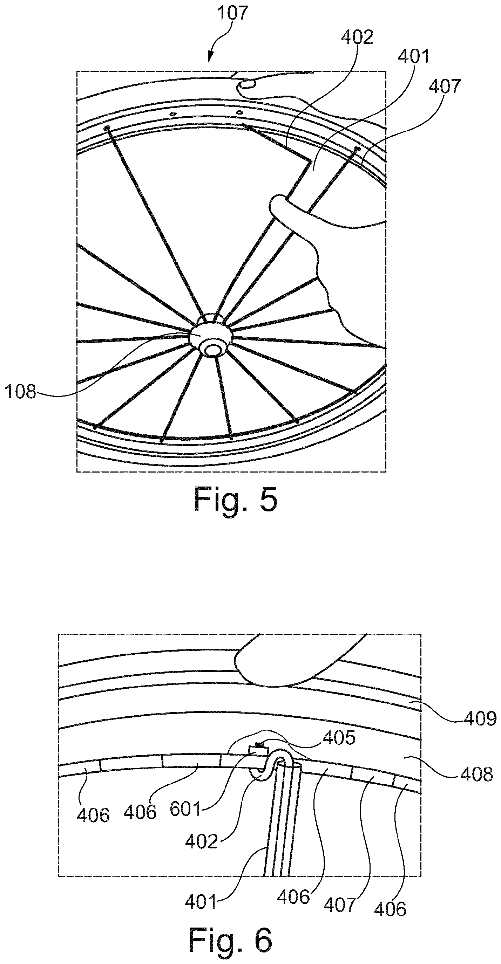

**Fig. 5** zeigt das Rad aus Fig. 4, wobei das elastische Zugelement 402 im gedehnten Zustand und die Speiche 401 mit ihrem zweiten Ende 404 in einem gelösten Zustand von dem Felgenelement 407 dargestellt ist. Wie gezeigt sind die Speichen 401 mit dem ersten Ende 403 an der Radnabe 108 und mit dem zweiten Ende 404 an dem Felgenelement 407 befestigt. Nach Einwirken der Aufprallkraft kann sich beispielsweise die Speiche 401 von dem Felgenelement 407 lösen, wobei dennoch eine Verbindung über das elastische Zugelement 402 besteht. Da das elastische Zugelement 402 elastisch verformbar ist, kann für einen erneuten Testeinsatz das Rad 107 einfach zusammengebaut werden, indem die Speiche 401 erneut in eine entsprechende Aufnahmebohrung an dem Felgenelement 407 gesteckt wird.

**Fig. 6** zeigt eine vergrößerte Darstellung eines Radaufbaus im Felgenbereich. Das Felgenelement 407 ist bandförmig ausgebildet, wobei das Band an zwei Enden verbunden ist. An der radial äußeren Seite des Felgenelements 407 ist Schaum als Füllmaterial 408 aufgebracht, um eine reale Dicke eines realen Felgenelements eines Fahrrades 100 zu simulieren. Auf dem Füllmaterial 408 ist ein Reifen 409 aufgebracht. Somit weist dieser Verbund eine radiale Ausdehnung gemäß einem realen Fahrradrad auf. Die Speiche 401 kann in einer Aufnahmebohrung des Felgenelements 407 gesteckt werden. In Fig. 6 ist die Speiche 401 in einem gelösten Zustand gezeigt, wobei lediglich das elastische Zugelement 402 in der Aufnahmebohrung hindurchgeführt wird. An der radial äußeren Seite des Felgenelements 407 weist das elastische Zugelement 402 eine Verdickung 405 auf, um ein Hinausrutschen zu verhindern.

Ferner wird in Fig. 6 dargestellt, dass ein Klemmelement 601, wie beispielsweise ein Klemmring aus Kunststoff in die Aufnahmebohrung befestigt werden kann, um eine verbesserte und schonende Fixierung des elastischen Zugelements 402 zu gewährleisten.

Ferner wird in der vergrößerten Darstellung nochmals aufgezeigt, dass entlang der Umfangsrichtung des Felgenelements 407 beabstandet voneinander Metallelemente 406 angeordnet sind.

**Fig. 7** zeigt eine Seitenansicht eines Fahrrads 100 als Fahrzeug gemäß Fig. 1 mit einem Dummy 701 als Fahrradfahrer. Das Rad 107 ist drehbar befestigt. Während des Test für ein Fahrerassistenzsystem kann sich das Rad 107, beispielsweise aufgrund eines Kontakts mit dem Untergrund, drehen, sodass hier ein realitätsnahes Simulieren während des Tests ermöglicht wird. Ferner ist das Fahrrad 100 auf dem Bodenelement 110 befestigt, welches über den Boden gezogen wird. Wie in Figur 7 verdeutlicht, bildet das Fahrrad 100 zusammen mit dem Dummy 701 ein realitätsnahes Kollisionsmodell, welches identische Abmessungen im Vergleich zu einem realen Fahrradfahrer mit Fahrrad aufweist.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden ist, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste:

- 100: Fahrzeug, Fahrrad
- 101: Grundkörper
- 102: Strebe
- 103: Rahmenelement
- 104: Verbindungsglied
- 105: Fahrzeuglenker
- 106: Fahrzeugsattel
- 107: Rad
- 108: Radnabe
- 109: Stange
- 110: Bodenelement

- 201: Einspannelement
- 202: elastisches Zugelement

- 401: Speiche
- 402: elastisches Zugelement
- 403: erstes Ende
- 404: zweites Ende
- 405: Verdickung
- 406: Metallelement
- 407: Felgenelement
- 408: Füllmaterial
- 409: Reifen

- 601: Klemmelement

- 701: Dummy

## Patentansprüche

1. Fahrzeug (100) zum Durchführen von Tests für ein Fahrerassistenzsystem , das Fahrzeug (100) aufweisend
einen Grundkörper (101),
zumindest eine Strebe (102), welche derart ausgebildet ist, dass ohne Einwirkung einer Aufprallkraft, welche bei Aufprall des Fahrzeugs (100) mit einem Kollisionskörper erzeugbar ist, die Strebe (102) formstabil ist und dass bei Einwirken der Aufprallkraft die Strebe (102) elastisch verformbar ist,
wobei die Strebe (102) derart mit dem Grundkörper (101) verbunden ist, dass bei Einwirken der Aufprallkraft die Strebe (102) von dem Grundkörper (101) zerstörungsfrei lösbar ist, und
ein elastisches Zugelement (202), welches mit dem Grundkörper (101) und der Strebe (102) derart verbunden ist, dass bei Einwirken der Aufprallkraft das Zugelement (202) zumindest an dem Grundkörper (101) oder der Strebe (102) befestigt bleibt und sich elastisch verformt,
wobei das elastische Zugelement (202) ausschließlich Zugkräfte zwischen dem Grundkörper (101) und der Strebe (102) überträgt.

2. Fahrzeug (100) gemäß Anspruch 1,
wobei der Grundkörper (101) steifer ausgeführt ist als die Strebe (102).

3. Fahrzeug (100) gemäß Anspruch 1 oder 2,
wobei der Grundkörper (101) ein Einspannelement (201), insbesondere einen elastischen Einspannclip, aufweist, in welchem die Strebe (102) mittels einer Klemmverbindung lösbar befestigbar ist.

4. Fahrzeug (100) gemäß einem der Ansprüche 1 bis 3,
wobei die Strebe (102) aus einem elastischem Kunststoff mit einem Elastizitätsmodul von 1000 N/mm² bis 3000 N/mm² ausgebildet ist,
wobei die Strebe (102) insbesondere eine Fließgrenze von 40 N/mm² bis 70 N/mm² aufweist.

5. Fahrzeug (100) gemäß Anspruch 1,
wobei das elastische Zugelement (202) als elastisches Band, als elastisches Seil oder als elastische Kette ausgebildet ist.

6. Fahrzeug (100) gemäß Anspruch 1 oder 5,
wobei die Strebe (102) ein Hohlprofil aufweist,
wobei insbesondere das elastische Zugelement (202) innerhalb des Hohlprofils verläuft.

7. Fahrzeug (100) gemäß einem der Ansprüche 1 bis 6,
wobei der Grundkörper (101) ein Rahmen bestehend aus mehreren, insbesondere drei, Rahmenelementen (103) ist, welche miteinander verbunden sind wobei an einem Verbindungsglied (104) insbesondere jeweils zwei Rahmenelemente (103) miteinander verbunden sind,
wobei das Fahrzeug insbesondere einen Fahrzeuglenker (105) aufweist,
wobei das Verbindungsglied (104) eine Aufnahmebohrung aufweist,
wobei der Fahrzeuglenker (105) in die Aufnahmebohrung lösbar einsteckbar ist.

8. Fahrzeug (100) gemäß einem der Ansprüche 1 bis 7, ferner aufweisend,
ein Dummyelement, welches an dem Rahmen befestigbar ist.

9. Fahrzeug (100) gemäß einem der Ansprüche 1 bis 8, ferner aufweisend
ein Rad (107) gemäß einem der Ansprüche 10 bis 14,
wobei die Radnabe (108) an der Strebe (102) drehbar befestigt ist,
wobei insbesondere ein elastisches Zugelement (202) zwischen dem Grundkörper (101), insbesondere einem Knotenpunkt, an welchem ein Fahrzeugsattel (106) anbringbar ist, und der Radnabe (108) befestigt ist.

10. Rad (107) zum Befestigen an ein Fahrzeug (100), insbesondere ein Fahrzeug (100) gemäß einem der Ansprüche 1 bis 9, zum Durchführen von Tests für ein Fahrerassistenzsystem, das Rad (107) aufweisend
eine Radnabe (108),
zumindest eine Speiche (401), welche derart ausgebildet ist, dass ohne Einwirkung einer Aufprallkraft, welche bei Aufprall des Fahrzeugs (100) mit einem Kollisionskörper erzeugbar ist, die Speiche (401) formstabil ist und bei Einwirken der Aufprallkraft die Speiche (401) elastisch verformbar ist,
wobei ein erstes Ende (403) der Speiche (401) derart mit der Radnabe (108) verbunden ist, dass bei Einwirken der Aufprallkraft die Speiche (401) von der Radnabe (108) zerstörungsfrei lösbar ist, und
ein elastisches Zugelement (402),
wobei das elastische Zugelement (402) mit der Radnabe (108) und der Speiche (401) derart verbunden ist, dass bei Einwirken der Aufprallkraft das Zugelement (402) an der Radnabe (108) und der Speiche (401) befestigt bleibt, und/oder wobei das elastische Zugelement (402) mit dem Felgenelement (407) und der Speiche (401) derart verbunden ist, dass bei Einwirken der Aufprallkraft das Zugelement (402) an dem Felgenelement (407) und der Speiche (401) befestigt bleibt,
wobei das elastische Zugelement (402) ausschließlich Zugkräfte zwischen dem Felgenelement (407) und der Speiche (401) überträgt.

11. Rad (107) gemäß Anspruch 10, ferner aufweisend
ein Felgenelement (407), welches kreisförmig ausgebildet ist,
wobei die Speiche (401) mit einem zweiten Ende (404) an dem Felgenelement (407) befestigt ist,
wobei das Felgenelement (407) insbesondere aus einem elastisch verformbaren Band besteht, welches an den entsprechenden Enden miteinander verbunden ist.

12. Rad (107) gemäß Anspruch 11,
wobei das Felgenelement (407) eine Metallbeschichtung oder Metallelemente (406) aufweist, welche hintereinander, insbesondere beabstandet voneinander, entlang eines Umfangs des Felgenelements angeordnet sind,
wobei die Metallelemente (406) eine größere Dicke als eine Dicke des Felgenelements aufweisen,
wobei die Metallelemente (406) insbesondere zumindest eine metallische Oberflächenbeschichtung aufweisen oder aus einer Metallverbindung, insbesondere einer Aluminiumverbindung, bestehen.

13. Rad (107) gemäß einem der Ansprüche 10 bis 12,
wobei auf einer radialen äußeren Oberfläche des Felgenelements ein Füllmaterial (408), insbesondere ein Luftschlauch oder ein elastisches aufgeschäumtes Material, aufgebracht ist, und/oder
wobei an einer radialen äußeren Oberfläche des Felgenelements ein Reifen (409), insbesondere eine Gummireifen, angeordnet ist, und/oder
wobei das Felgenelement (407) zumindest eine Aufnahmebohrung aufweist, in welche das zweite Ende (404) der Speiche (401) derart in die Aufnahmebohrung der Radnabe (108) gesteckt ist, dass bei Einwirken der Aufprallkraft die Speiche (401) von dem Felgenelement (407) zerstörungsfrei lösbar ist.

14. Rad (107) gemäß einem der Ansprüche 10 bis 13,
wobei das elastische Zugelement (402) als elastisches Band, als elastisches Seil oder als elastische Kette ausgebildet ist,
wobei die Speiche (401) insbesondere ein Hohlprofil aufweist,
wobei insbesondere das elastische Zugelement (402) innerhalb des Hohlprofils verläuft,
wobei das elastische Zugelement (402) insbesondere eine Verdickung (405), insbesondere einen Knoten, aufweist,
wobei die Verdickung (405) größer ist als ein Öffnungsquerschnitt des Hohlprofils.

15. Verfahren zum Durchführen von Tests für ein Fahrerassistenzsystem mit einem Fahrzeug (100) nach einem der Ansprüche 1 bis 9, das Verfahren aufweisend
Erzeugen eines Aufpralls des Fahrzeugs (100) mit einem Kollisionskörper, so dass eine Aufprallkraft entsteht,
wobei eine Strebe (102) ohne Einwirkung einer Aufprallkraft formstabil ist und bei Einwirken der Aufprallkraft die Strebe (102) elastisch verformbar ist,
wobei die Strebe (102) derart mit dem Grundkörper (101) verbunden ist, dass bei Einwirken der Aufprallkraft die Strebe (102) von dem Grundkörper (101) zerstörungsfrei lösbar ist,
wobei ein elastisches Zugelement (202), welches mit dem Grundkörper (101) und der Strebe (102) verbunden, bei Einwirken der Aufprallkraft das Zugelement (202) zumindest an dem Grundkörper (101) oder der Strebe (102) befestigt bleibt und sich elastisch verformt,
wobei das elastische Zugelement (202) ausschließlich Zugkräfte zwischen dem Grundkörper (101) und der Strebe (102) überträgt.

## Claims

1. Vehicle (100) for performing tests for a driver assistance system, the vehicle (100) comprising
a base body (101),
at least one strut (102) which is adapted such that, without an action of an impact force which is generatable in the case of an impact of the vehicle (100) with a collision body, the strut (102) is dimensionally stable, and such that, when the impact force is acting, the strut (102) is elastically deformable,
wherein the strut (102) is connected to the base body (101) such that, when the impact force is acting, the strut (102) is non-destructively releasable from the base body (101), and
an elastic tension element (202) which is connected to the base body (101) and to the strut (102) such that, when the impact force is acting, the tension element (202) remains attached at least to the base body (101) or to the strut (102) and elastically deforms,
wherein the elastic tension element (202) exclusively transfers tension forces between the base body (101) and the strut (102).

2. Vehicle (100) according to claim 1,
wherein the base body (101) is configured more rigid than the strut (102).

3. Vehicle (100) according to claim 1 or 2,
wherein the base body (101) comprises a clamping element (201), in particular an elastic clamping clip, in which the strut (102) is releasably attachable by means of a clamping connection.

4. Vehicle (100) according to one of the claims 1 to 3,
wherein the strut (102) is made of an elastic plastic with an elastic modulus of 1000 N/mm² to 3000 N/mm², wherein the strut (102) in particular comprises a flow limit of 40 N/mm² to 70 N/mm².

5. Vehicle (100) according to claim 1,
wherein the elastic tension element (202) is configured as an elastic ribbon, as an elastic rope or as an elastic chain.

6. Vehicle (100) according to claim 1 or 5,
wherein the strut (102) comprises a hollow profile,
wherein in particular the elastic tension element (202) is running within the hollow profile.

7. Vehicle (100) according to one of the claims 1 to 6,
wherein the base body (101) is a frame consisting of multiple, in particular three, frame elements (103) which are connected to each other, wherein at a connecting member (104) in particular respectively two frame elements (103) are connected to each other,
wherein the vehicle in particular comprises a vehicle steering means (105), wherein the connecting member (104) comprises a receiving bore,
wherein the vehicle steering means (105) is detachably insertable in the receiving bore.

8. Vehicle (100) according to one of the claims 1 to 7, further comprising a dummy element which is attachable to the frame.

9. Vehicle (100) according to one of the claims 1 to 8, further comprising
a wheel (107) according to one of the claims 10 to 14,
wherein the wheel hub (108) is rotatably attached to the strut (102),
wherein in particular an elastic tension element (202) is attached between the base body (101), in particular a node point to which a vehicle saddle is attachable, and the wheel hub (108).

10. Wheel (107) for attaching to a vehicle (100), in particular a vehicle (100) according to one of the claims 1 to 9, for performing tests for a driver assistance system, the wheel (107) comprising
a wheel hub (108),
at least one spoke (401) which is configured such that, without an action of an impact force which is generatable in the case of an impact of the vehicle (100) with a collision body, the spoke (401) is dimensionally stable, and when the impact force is acting, the spoke (401) is elastically deformable,
wherein a first end (403) of the spoke (401) is connected to the wheel hub (108) such that, when the impact force is acting, the spoke (401) is non-destructively detachable from the wheel hub (108), and
an elastic tension element (402),
wherein the elastic tension element (402) is connected to the wheel hub (108) and the spoke (401) such that, when the impact force is acting, the tension element (402) remains attached to the wheel hub (108) and the spoke (401), and/or
wherein the elastic tension element (402) is connected to the rim element (407) and the spoke (401) such that, when the impact force is acting, the tension element (402) remains attached to the rim element (407) and the spoke (401), wherein the elastic tension element (402) exclusively transfers tension forces between the rim element (407) and the spoke (401).

11. Wheel (107) according to claim 10, further comprising
a rim element (407) which is circularly shaped,
wherein the spoke (401) is attached with a second end (404) to the rim element (407),
wherein the rim element (407) in particular is consisting of an elastically deformable ribbon which is connected to each other at the respective ends.

12. Wheel (107) according to claim 11,
wherein the rim element (407) comprises a metal coating or metal elements (406) which are arranged serially, in particular spaced apart from each other, along a circumference of the rim element,
wherein the metal elements (406) have a larger thickness than a thickness of the rim element,
wherein the metal elements (406) in particular comprise at least one metallic surface coating or are consisting of a metal compound, in particular an aluminum compound.

13. Wheel (107) according to one of the claims 10 to 12,
wherein on a radial outer surface of the rim element a filling material (408), in particular an air hose or an elastic foamed material, is applied, and/or
wherein at a radial outer surface of the rim element a tire (409), in particular a rubber tire, is arranged, and/or
wherein the rim element (407) comprises at least one receiving bore, in which the second end (404) of the spoke (401) is inserted in the receiving bore of the wheel hub (108), such that, when the impact force is acting, the spoke (401) is non-destructively releasable from the rim element (407).

14. Wheel (107) according to one of the claims 10 to 13,
wherein the elastic tension element (402) is configured as an elastic ribbon, as an elastic rope or as an elastic chain,
wherein the spoke (401) in particular comprises a hollow profile,
wherein in particular the elastic tension element (402) is running within the hollow profile,
wherein the elastic tension element (402) in particular comprises a thickening (405), in particular a knot,
wherein the thickening (405) is larger than an opening cross-section of the hollow profile.

15. Method of performing tests for a driver assistance system with a vehicle (100) according to one of the claims 1 to 9, the method comprising
generating an impact of the vehicle (100) with a collision body, such that an impact force is generated,
wherein a strut (102), without an action of an impact force, is dimensionally stable and, when the impact force is acting, the strut (102) is elastically deformable,
wherein the strut (102) is connected to the base body (101) such that, when the impact force is acting, the strut (102) is non-destructively detachable from the base body (101),
wherein an elastic tension element (202) which is connected to the base body (101) and the strut (102), when the impact force is acting, the tension element (202) remains attached at least to the base body (101) or the strut (102) and elastically deforms,
wherein the elastic tension element (202) exclusively transfers tension forces between the base body (101) and the strut (102).

## Revendications

1. Véhicule (100) pour effectuer des tests pour un système d'assistance à un conducteur, le véhicule (100) comprenant
un corps de base (101),
au moins un montant (102), qui est conçu de telle sorte que le montant (102) est dimensionnellement stable en l'absence de l'action d'une force d'impact qui peut être générée lorsque le véhicule (100) entre en collision avec un corps de collision, et de telle sorte que le montant (102) est élastiquement déformable lorsque la force d'impact est appliquée, le montant (102) étant relié au corps de base (101) de telle sorte que le montant (102) peut être détaché du corps de base (101) de manière non destructive lorsque la force d'impact est appliquée, et
un élément de tension élastique (202), qui est relié au corps de base (101) et au montant (102) de telle manière que, lorsque la force d'impact est appliquée, l'élément de tension (202) reste fixé au moins au corps de base (101) ou au montant (102) et se déforme élastiquement,
l'élément de tension élastique (202) transmettant exclusivement des forces de tension entre le corps de base (101) et le montant (102).

2. Véhicule (100) selon la revendication 1,
dans lequel le corps de base (101) est conçu de manière plus rigide que le montant (102).

3. Véhicule (100) selon la revendication 1 ou la revendication 2,
dans lequel le corps de base (101) comporte un élément de serrage (201), en particulier un clip de serrage élastique dans lequel le montant (102) est apte à être fixé de manière amovible au moyen d'une liaison par serrage.

4. Véhicule (100) selon l'une des revendications 1 à 3,
dans lequel le montant (102) est constitué d'une matière plastique élastique ayant un module d'élasticité allant de 1000 N/mm² à 3000 N/mm²,
le montant (102) ayant notamment une limite élastique allant de 40 N/mm² à 70 N/mm².

5. Véhicule (100) selon la revendication 1,
dans lequel l'élément de tension élastique (202) est conçu sous la forme d'une bande élastique, d'une corde élastique ou d'une chaîne élastique.

6. Véhicule (100) selon la revendication 1 ou la revendication 5,
dans lequel le montant (102) a un profil creux,
dans lequel en particulier l'élément de tension élastique (202) s'étend à l'intérieur du profilé creux.

7. Véhicule (100) selon l'une des revendications 1 à 6,
dans lequel le corps de base (101) est un cadre constitué de plusieurs, en particulier de trois, éléments de cadre (103) qui sont reliés entre eux, deux éléments de cadre (103) étant notamment chacun reliés entre eux sur un élément de liaison (104),
le véhicule comprenant notamment un organe de conduite (105),
l'élément de liaison (104) présentant un alésage de réception,
l'organe (105) de conduite du véhicule étant apte à être inséré de manière amovible dans l'alésage de réception.

8. Véhicule (100) selon l'une des revendications 1 à 7, comprenant en outre,
un élément factice qui est apte à être fixé au cadre.

9. Véhicule (100) selon l'une des revendications 1 à 8, comprenant en outre
une roue (107) selon l'une des revendications 10 à 14,
le moyeu (108) de la roue étant fixé de manière rotative au montant (102),
un élément de tension élastique (202) étant en particulier fixé entre le corps de base (101) et le moyeu (108) de la roue, notamment à une jonction à laquelle une selle de véhicule (106) est apte à être fixée.

10. Roue (107) destinée à être fixée sur un véhicule (100), en particulier un véhicule (100) selon l'une des revendications 1 à 9, pour effectuer des tests pour un système d'assistance à un conducteur, la roue (107) comprenant
un moyeu (108) de roue,
au moins un rayon (401), qui est conçu de telle manière que le rayon (401) est dimensionnellement stable en l'absence de l'action d'une force d'impact qui peut être générée lorsque le véhicule (100) entre en collision avec un corps de collision, et le rayon (401) est élastiquement déformable lorsque la force d'impact est appliquée,
une première extrémité (403) du rayon (401) est reliée au moyeu (108) de la roue de telle sorte que lorsque la force d'impact est appliquée, le rayon (401) est apte à être détaché du moyeu (108) de roue sans destruction, et
un élément de tension élastique (402),
l'élément de tension élastique (402) étant relié au moyeu (108) de la roue et au rayon (401) de telle sorte que, lorsque la force d'impact est appliquée, l'élément de tension (402) reste attaché au moyeu de la roue (108) et au rayon (401), et/ou l'élément de tension élastique (402) est relié à l'élément (407) formant jante et au rayon (401), de telle sorte que lorsque la force d'impact est appliquée, l'élément de tension (402) reste attaché à l'élément (407) formant jante et au rayon (401), l'élément de tension élastique (402) transmettant exclusivement les forces de tension entre l'élément (407) formant jante et le rayon (401).

11. Roue (107) selon la revendication 10, comprenant en outre
un élément (407) formant jante qui est de forme circulaire,
le rayon (401) étant fixé à l'élément (407) formant jante par une deuxième extrémité (404),
l'élément (407) formant jante étant constitué notamment d'une bande élastiquement déformable dont les extrémités correspondantes sont reliées l'une à l'autre.

12. Roue (107) selon la revendication 11,
dans laquelle l'élément (407) formant jante présente un revêtement métallique ou des éléments métalliques (406) qui sont disposés les uns derrière les autres, en particulier à distance les uns des autres, le long d'une circonférence de l'élément formant jante,
les éléments métalliques (406) ayant une épaisseur supérieure à l'épaisseur dudit élément formant jante,
les éléments métalliques (406) ayant en particulier au moins un revêtement de surface métallique ou étant constitués d'un composé métallique, en particulier d'un composé d'aluminium.

13. Roue (107) selon l'une des revendications 10 à 12,
dans laquelle un matériau de remplissage (408), en particulier un tube à air ou un matériau élastique en mousse, est appliqué sur une surface radialement extérieure de l'élément formant jante, et/ou
dans laquelle un pneu (409), en particulier un pneu en caoutchouc, est disposé sur une surface radialement extérieure de l'élément formant jante, et/ou dans laquelle l'élément (407) formant jante présente au moins un alésage de réception, la deuxième extrémité (404) du rayon (401) étant insérée dans l'alésage de réception du moyeu (108) de roue de telle sorte que, lorsque la force d'impact est appliquée, le rayon (401) puisse être détaché de l'élément (407) formant jante de manière non destructive.

14. Roue (107) selon l'une des revendications 10 à 13,
dans laquelle l'élément de tension élastique (402) est conçu sous la forme d'une bande élastique, d'une corde élastique ou d'une chaîne élastique,
dans laquelle le rayon (401) a notamment un profil creux,
dans laquelle en particulier l'élément de tension élastique (402) s'étend à l'intérieur du profilé creux,
dans laquelle l'élément de tension élastique (402) présente notamment un épaississement (405), en particulier un nœud,
dans laquelle l'épaississement (405) est plus grand qu'une section d'ouverture du profilé creux.

15. Procédé pour effectuer des tests pour un système d'assistance à un conducteur avec un véhicule (100) selon l'une des revendications 1 à 9, le procédé comprenant
le fait de générer un impact du véhicule (100) avec un corps de collision de sorte qu'une force d'impact soit générée,
un montant (102) étant dimensionnellement stable en l'absence de l'action d'une force d'impact et, lorsque la force d'impact est appliquée, le montant (102) étant élastiquement déformable,
le montant (102) étant relié au corps de base (101) de telle sorte que le montant (102) est apte à être détaché du corps de base (101) de manière non destructive lorsque la force d'impact est appliquée,
un élément de tension élastique (202), qui est relié au corps de base (101) et au montant (102), l'élément de tension (202), lorsque la force d'impact est appliquée, restant fixé au moins au corps de base (101) ou au montant (102) et se déformant élastiquement,
l'élément de tension élastique (202) transmettant exclusivement les forces de tension entre le corps de base (101) et le montant (102).
